# EUROPÄISCHE PATENTSCHRIFT

(11) **EP 2 504 915 B1**
(45) Veröffentlichungstag und Bekanntmachung des Hinweises auf die Patenterteilung: **26.02.2014**
(21) Anmeldenummer: 10760318.5
(22) Anmeldetag: 27.09.2010
(51) Int. Cl.: H02P 1/18, F02N 11/08, H02J 7/34

(54) **STARTERVERSORGUNGSNETZ**
STARTER SUPPLY NETWORK
RÉSEAU D'ALIMENTATION DE DÉMARREUR

(30) Priorität: 26.11.2009 DE 102009047177
(43) Veröffentlichungstag der Anmeldung: 03.10.2012
(73) Patentinhaber: Robert Bosch GmbH, 70442 Stuttgart (DE)
(72) Erfinder: CWIK, Matthias, 70197 Stuttgart (DE); SENGEBUSCH, Falco, 70469 Stuttgart-Feuerbach (DE)
(86) Internationale Anmeldenummer: PCT/EP2010/064234
(87) Internationale Veröffentlichungsnummer: WO 2011/064015

(56) Entgegenhaltungen:
- DE-A1-102004 016 292
- DE-A1-102008 012 640
- DE-C2- 4 340 350

## Beschreibung

Die vorliegende Erfindung betrifft das Gebiet der Startersysteme in Fahrzeugantrieben.

### Stand der Technik

In modernen Fahrzeugantrieben werden zum Anlassen einer primären Antriebsquelle, beispielsweise eines Verbrennungsmotors, so genannte Startermotoren eingesetzt, welche üblicherweise als elektrische Motoren ausgebildet sind. Die Aufgabe eines Startermotors besteht darin, den Verbrennungsmotor auf eine Mindestdrehzahl zu beschleunigen, damit der Verbrennungsvorgang selbstständig ablaufen und das Erreichen eines stabilen Leerlaufs alleine durch den Verbrennungsvorgang erfolgen kann. Zum Versorgen des Startermotors mit elektrischer Energie werden üblicherweise Starterversorgungsnetze bzw. Bordnetze eingesetzt, welche in der Regel aus einer Batterie, dem Startermotor und einer Zuleitung, welche die Batterie mit dem Startermotor verbindet, bestehen.

Zum Anlassen des Verbrennungsmotors wird bei vorliegendem Startwunsch des Fahrers mittels eines Starterrelais ein Schaltkontakt geschlossen, der den Startermotor direkt über die Zuleitung mit der Batterie verbindet. Nach einem maximalen Strom im ersten Startaugenblick sinkt der Strom jedoch rasch wieder ab, weil durch die einsetzende Drehung des Startermotors eine Spannung induziert wird, welche der von außen angeregten Spannung entgegengesetzt ist. Nach Erreichen einer Mindestdrehzahl des Verbrennungsmotors wird dieser in einen Selbstlauf überführt, wozu der Schaltkontakt geöffnet und der Startvorgang beendet wird.

Eines der Zielkriterien bei der Auslegung einer Starteranlage und eines Verbrennungsmotors besteht in der Minimierung der Startzeit, d.h. der Zeit vom Beginn des Starts bis zum Erreichen einer bestimmten Drehzahlschwelle durch den Verbrennungsmotor. Hierzu kann beispielsweise die von dem Starter an den Verbrennungsmotor abgegebene Leistung erhöht werden, was jedoch einen größeren Einschaltstrom zur Folge hat. Dadurch können beispielsweise bei einem permanent erregten Gleichstrommotor als Startermotor die Permanentmagnete entmagnetisiert werden, was eine dauerhafte Leistungsreduzierung des Startermotors zur Folge hat. Der höhere Einschaltstrom, d.h. Starterstrom, hat auch ein höheres Drehmoment des Startermotors zur Folge, für das die einzelnen Komponenten des Startermotors gegebenenfalls nicht ausgelegt sind, so dass mit einem erhöhten Verschleiß oder sogar Zerstörung des Startermotors gerechnet werden kann. Darüber hinaus kann der Startermotor auch eine zu hohe Leerlaufdrehzahl erreichen, wobei die resultierenden Zentrifugalkräfte zu dessen Zerstörung beitragen können. Zwar ist eine Regelung einer Starterleistung über eine Leistungselektronik stets möglich. Diese ist jedoch mit einem schaltungstechnischen Aufwand und den damit verbundenen, erhöhten Kosten verbunden.

Aus der DE 10 2004 016 292 A1 ist eine Schaltungsanordnung einer Starteranlage eines Kraftfahrzeugs bekannt, die einen Startermotor, einen Kondensator und einen Akkumulator aufweist.

Aus der DE 10 2008 012 640 A1 ist eine Vorrichtung zur Kopplung zweier Teilnetze in einem Fahrzeugbordnetz bekannt.

Aus der DE 43 40 350 C2 ist eine Schaltungsanordnung für ein Kraftfahrzeug bekannt, die eine aufladbare Batterie und einen mit dieser parallel schaltbaren Kondensator aufweist.

### Offenbarung der Erfindung

Die Erfindung wird durch die Merkmale des Anspruchs 1 definiert. Die abhängigen Ansprüche beschreiben vorteilhafte Ausgestaltungen der Erfindung.

Die Erfindung basiert auf der Erkenntnis, eine zweite Energiequelle, beispielsweise eine zweite Spannungsquelle, als Starterunterstützung in das Starterversorgungsnetz zu integrieren. Die zweite Energiequelle kann beispielsweise als eine Batterie oder als Kondensator ausgebildet sein. Bevorzugt sind beide Spannungsquellen so zu schalten, dass über eine Spannungsquelle der Starter eingeschaltet wird, und, nachdem der Starterstrom auf ein bestimmtes Niveau abgefallen ist, die zweite Energiequelle anschließend dazu geschaltet oder stattdessen eingeschaltet wird. Die zweite Energiequelle kann beispielsweise so gewählt werden, dass der Starterstrom nach dem Zuschalten größer als vor dem Zuschalten der zweiten Energiequelle ist. Der Schaltaugenblick kann ferner so gewählt werden, dass eine zweite Stromspitze nicht zu einer Entmagnetisierung der Permanentmagnete führt. Auf diese Weise ist es möglich, mehr Leistung als bisher zu übertragen, ohne dass eine Entmagnetisierung stattfindet, die maximalen Drehmomente des Startermotors überschritten werden oder der Leerlauf zu groß wird.

Erfindungsgemäß ist der Koppler ausgebildet, die zweite Energie mit dem Netzanschluss nach Ablauf eines bestimmten Zeifintervalls nach Erreichen eines Stromkurzschlusswertes durch den Startermotorstrom, zu koppeln. Dadurch wird in vorteilhafter Weise sichergestellt, dass die erste Energiequelle durch die zweite Energiequelle unterstützt wird.

Gemäß einem Aspekt betrifft die Erfindung ein Starterversorgungsnetz, mit einer ersten Energiequelle zur primären Energieversorgung eines Startermotors, wobei die erste Energiequelle mit einem Netzanschluss des Starterversorgungsnetzes gekoppelt ist, einer zweiten Energiequelle, und einem Koppler, welcher ausgebildet ist, die zweite Energiequelle in Abhängigkeit von einem von der ersten Energiequelle abgegebenen Startermotorstrom, mit dem Netzanschluss zu koppeln, um einer Verringerung des Startermotorstroms entgegenzuwirken. Bevorzugt wird der Startermotor mithilfe der ersten Energiequelle gestartet, wobei die zweite Energiequelle nach dem Startvorgang dazu geschaltet wird, um beispielsweise den Startermotorstrom zu erhöhen.

Gemäß einer Ausführungsform ist der Koppler ausgebildet, die zweite Energiequelle mit dem Netzanschluss bei Erreichen, bei Unterschreiten oder bei Überschreiten eines bestimmten Stromschwellwertes durch den Startermotorstrom zu koppeln. Dadurch wird in vorteilhafter Weise sichergestellt, dass die zweite Energiequelle nur dann zugeschaltet wird, wenn der Startermotorstrom beispielsweise absinkt. Die zweite Energiequelle kann beispielsweise dazu geschaltet werden, um das Absinken des Startermotorstroms auszugleichen.

Der Netzanschluss kann beispielsweise einen Ausgang zum Ausgeben des Startermotorstroms bilden. Über den Netzanschluss kann jedoch auch die primäre Energiequelle, beispielsweise eine Starterbatterie, und/oder die zweite Energiequelle beispielsweise mittels eines elektrischen Generators geladen werden.

Gemäß einer Ausführungsform ist der Koppler ausgebildet, die zweite Energiequelle zum Erhöhen des Startermotorstroms mit dem Netzanschluss zu koppeln. Dadurch wird in vorteilhafter Weise erreicht, dass der Startermotor nach dem Anlassen desselben zusätzlich mit Energie versorgt wird.

Gemäß einer vorteilhaften Ausführungsform umfasst der Koppler einen steuerbaren Schalter, beispielsweise einen Transistorschalter, welcher ausgebildet ist, die zweite Energiequelle mit dem Netzanschluss zu koppeln. Der Transistorschalter kann beispielsweise ein Leistungstransistorschalter sein, so dass in vorteilhafter Weise sichergestellt werden kann, dass die zweite Energiequelle elektrisch schnell belastet werden kann.

Gemäß einer vorteilhaften Ausführungsform umfasst der Koppler zwei hintereinander geschaltete Schalter, insbesondere Transistorschalter, welche vorgesehen sind, die zweite Energiequelle mit dem Netzanschluss zu koppeln, wobei der Startermotor Strom über einen Ausgangsanschluss zwischen den beiden hintereinander geschalteten Schaltern ausgebbar ist. Auf diese Weise wird sichergestellt, dass zwischen dem Ausgangsanschluss und dem Netzanschluss ein weiterer Schalter vorgesehen ist, was ein Abschalten der ersten Energiequelle ermöglicht.

Gemäß einer vorteilhaften Ausführungsform ist der Koppler ausgebildet, die zweite Energiequelle über eine Diode zu koppeln. Die Diode kann beispielsweise in Flussrichtung geschaltet sein, wodurch eine Rückwirkung des Starters auf die zweite Energiequelle vermindert wird. Die Diode kann jedoch auch in Sperrrichtung geschaltet sein, wodurch in vorteilhafter Weise sichergestellt wird, dass nach dem Zuschalten der zweiten Energiequelle deren Ladung nicht in das Starterversorgungsnetz eingespeist wird. Der Startermotorstrom kann in diesem Fall über einen Anschluss zwischen dem Schalter und der Diode ausgegeben werden.

Gemäß einer vorteilhaften Ausführungsform ist die erste Energiequelle eine Startermotorbatterie zur primären Versorgung des Startermotors mit Energie. Die zweite Energiequelle kann hingegen eine weitere Batterie oder ein Kondensator sein.

Gemäß einem weiteren Aspekt betrifft die Erfindung ein Startermotorsystem mit einem Startermotor und dem erfindungsgemäßen Starterversorgungsnetz zum Versorgen des Startermotors mit elektrischer Energie.

Weitere Ausführungsbeispiele werden Bezug nehmend auf die beiliegenden Zeichnungen näher erläutert. Es zeigen:

Fig. 1 ein Starterversorgungsnetz;

Fig. 2 ein Starterversorgungsnetz;

Fig. 3 ein Starterversorgungsnetz; und

Fig. 4 simulierte Startermotorströme.

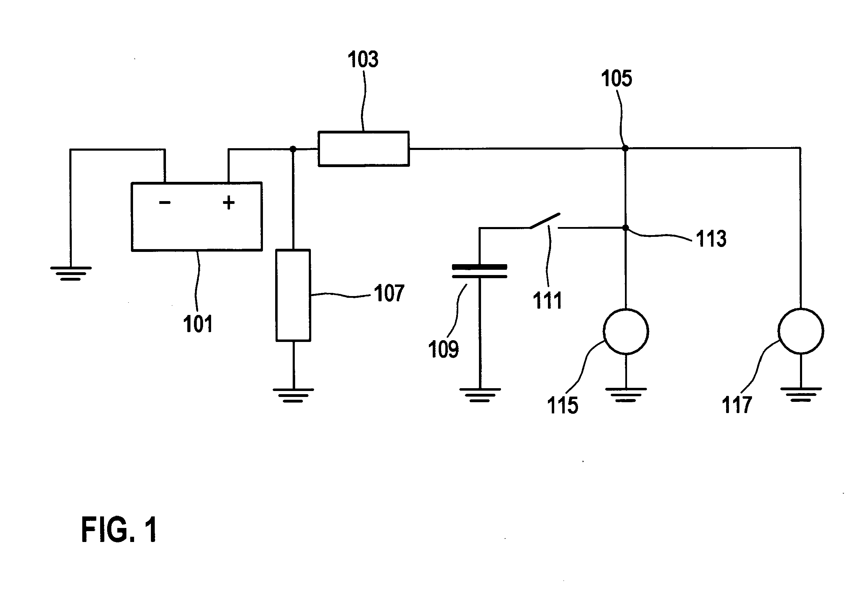

Fig. 1 zeigt ein Starterversorgungsnetz mit einer ersten Energiequelle 101, welche beispielsweise über einen Leitungswiderstand 103 mit einem Netzanschluss 105 gekoppelt ist. Ein Anschluss der ersten Energiequelle 101 ist ferner über einen Widerstand 107 mit Masse verbunden. Das Starterversorgungsnetz umfasst ferner eine zweite Energiequelle 109, beispielsweise einen Kondensator, welcher über einen Koppler 111, beispielsweise einen Schalter, mit dem Netzanschluss 105 koppelbar ist. Ein Ausgang des Schalters 111 bildet einen Anschluss 113, mit dem beispielsweise ein Startermotor 115 verbindbar ist. An den Netzanschluss 105 kann ferner ein Generator 117 angeschlossen werden. Der Anschluss 113 ist mit dem Netzanschluss 105 verbunden.

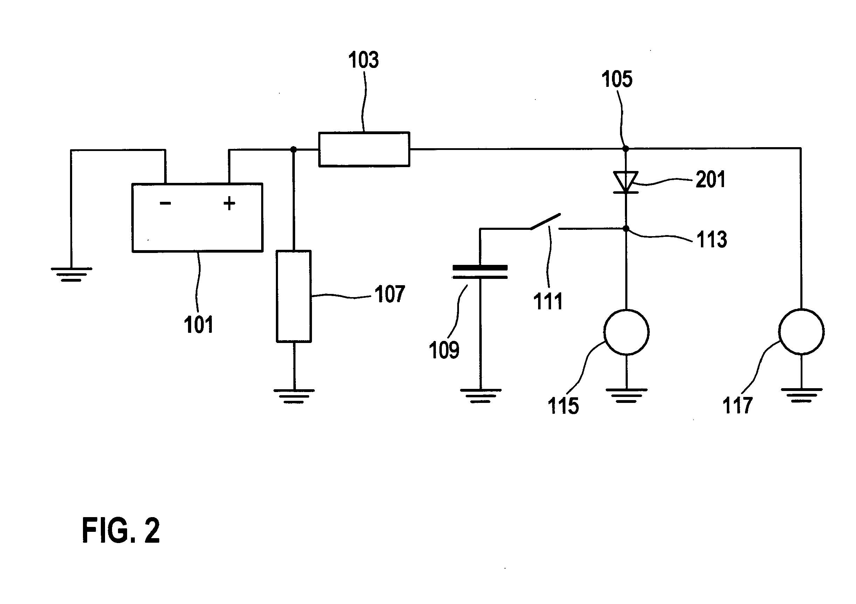

Fig. 2 zeigt ein Starterversorgungsnetz, bei dem im Unterschied zu dem in Fig. 1 dargestellten Starterversorgungsnetz zwischen dem Anschluss 113 und dem Netzanschluss 105 eine in Sperrrichtung betriebene Diode 201 geschaltet ist. Dadurch wird beim Zuschalten der zweiten Energiequelle 109 verhindert, dass Ladung in Richtung der ersten Energiequelle, d.h. in Richtung des Starterversorgungsnetzes abfließt. Dadurch wird in vorteilhafter Weise sichergestellt, dass in der zweiten Energiequelle gespeicherte Energie dem Startermotor 115 voll zur Verfügung steht. Die Diode 201 kann gemäß einer weiteren Ausführungsform jedoch auch in Flussrichtung geschaltet sein, wodurch verhindert werden kann, dass der aus der ersten Energiequelle 101 bezogene Starterstrom zum Laden der zweiten Energiequelle 109 ungewollt abfließt. Zum Laden der zweiten Energiequelle 109 kann ferner ein weiterer Schalter vorgesehen sein, beispielsweise ein paralleler Schalter, welcher nach dem Start des Startermotors 115 bevorzugt nur zum Laden der zweiten Energiequelle 109 geschlossen wird.

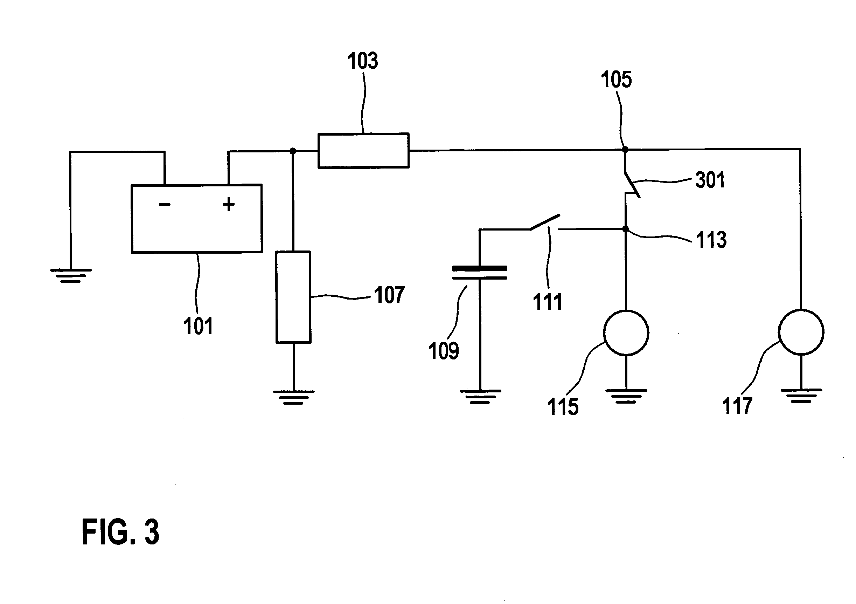

Fig. 3 zeigt ein Starterversorgungsnetz, bei dem im Unterschied zu dem in Fig. 1 dargestellten Starterversorgungsnetz zwischen dem Anschluss 113 und dem Netzanschluss 105 ein weiterer Schalter 301 angeordnet ist. Dadurch kann in vorteilhafter Weise ein Umschaltzeitpunkt frei gewählt werden, bei dem beispielsweise die erste Energiequelle 101 abgeschaltet werden kann.

Die zweite Energiequelle ist bevorzugt so zu wählen, dass diese während des Startervorgangs zu einem zusätzlichen Starterstrom beiträgt. Dies kann beispielsweise durch einen geeignet gewählten Kondensator sichergestellt werden, welcher deutlich mehr Energie speichern kann, als zum Boosten des Starterstroms notwendig ist. Darüber hinaus kann der Schalter 111 nur dann aktiviert werden, wenn die Spannungslage der zweiten Energiequelle höher ist als an dem Startermotor 115. Hierzu kann beispielsweise eine zusätzliche Spannungsdifferenzmessung, beispielsweise mittels eines in den Figuren 1 bis 3 nicht dargestellten Spannungsdifferenzmessers erfolgen.

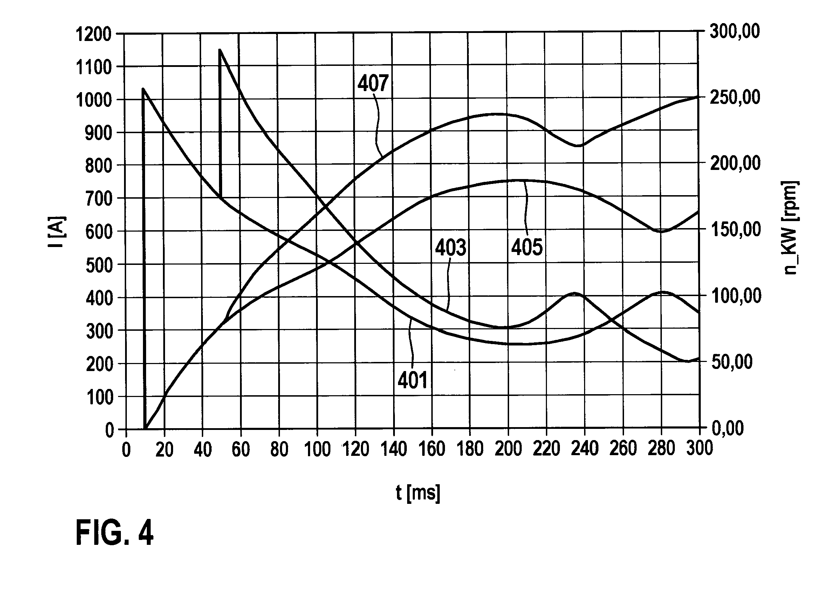

Fig. 4 zeigt simulierte Verläufe der Startermotorströme 401 und 403 und der dazugehörigen Motordrehzahlen 405 und 407. Dabei entspricht der Startermotorverlauf 401 und der Motordrehzahlverlauf 405 dem konventionellen Ansatz zum Starten des Startermotors. Der Startermotorstromverlauf 403 sowie die dazugehörige Motordrehzahl 407 ergeben sich bei der Verwendung des erfindungsgemäßen Konzeptes.

Der Startvorgang kann beispielsweise wie gewohnt über die erste Energiequelle 101, beispielsweise über eine Blei-Säure-Batterie beginnen. Im ersten Augenblick steigt der Starterstrom auf einen maximalen Kurzschlusswert bei etwa 1000 A an. Mit der einsetzenden Drehung des Startermotors sinkt dieser Strom entlang der Starterstromkurve 401 jedoch ab. Nach einer bestimmten Zeit, beispielsweise nach etwa 50 ms, wird die zweite Energiequelle bevorzugt in direkte Nähe zum Startermotor parallel dazugeschaltet, wobei die zweite Energiequelle 109 ein vollgeladener Kondensator sein kann. Dadurch erhöht sich der Starterstrom auf einen Wert oberhalb von beispielsweise 1100 A, wodurch der Starterstrom entlang des Starterstromverlaufs 403 eingestellt wird. Durch das Zuschalten der zweiten Energiequelle erhöht sich der Starterstrom, wodurch der Verbrennungsmotor, welcher durch den Startermotor angetrieben wird, schneller beschleunigen kann. Auf diese Weise ergibt sich im Startvorgang ein Zeitvorteil.

Der Zeitpunkt, zu dem die zweite Energiequelle in den Schaltkreis dazugeschaltet wird, kann in Abhängigkeit von der Auslegung des Starterversorgungsnetzes, bei der beispielsweise die Spannungslagen und Innenwiderstände der Energiequellen, beispielsweise Spannungsquellen, die Zuleitungswiderstände sowie das Hochlaufverhalten des Startermotors berücksichtigt werden können. Hierbei sind verschiedene Strategien denkbar. So kann die zweite Energiequelle beispielsweise nach einer fest vorgegebenen Zeit, beispielsweise 50 ms, nach Erreichen eines Kurzschlussstroms eingeschaltet werden. Die zweite Energiequelle kann ferner eingeschaltet werden, nachdem der Starterstrom beispielsweise eine gewisse Stromschwelle unterschritten hat. Die zweite Energiequelle kann ferner eingeschaltet werden, nachdem die Batterieklemmenspannung, d.h. die Ausgangsspannung der zweiten Energiequelle, eine bestimmte Schwelle überschritten hat.

Die in Fig. 4 dargestellten Verläufe verdeutlichen einen simulierten Start eines Dieselmotors mit einer Ausgangsspannung der ersten Energiequelle bei 11,7 V, einem Innenwiderstand der ersten Energiequelle bei 3,75 mOhm und 0°C, bei 25% Qv und 80% SOC. Die Ausgangsspannung der zweiten Energiequelle lag bei 14,4 V bei einem Innenwiderstand von 2,5 mOhm und einer Temperatur von 124 F.

## Patentansprüche

1. Starterversorgungsnetz, mit:
einer ersten Energiequelle (101) zur primären Energieversorgung eines Startermotors, wobei die erste Energiequelle (101) mit einem Netzanschluss (105) des Starterversorgungsnetzes gekoppelt ist;
einer zweiten Energiequelle (109); und
einem Koppler (111, 301) welcher ausgebildet ist, die zweite Energiequelle (109) in Abhängigkeit von einem von der ersten Energiequelle (101) abgegebenen Startermotorstrom mit dem Netzanschluss (105) zu koppeln, um einer Verringerung des Startermotorstroms entgegenzuwirken,
**dadurch gekennzeichnet, dass** der Koppler (111, 301) ausgebildet ist, die zweite Energiequelle (109) mit dem Netzanschluss (105) nach Ablauf eines bestimmten Zeitintervalls nach Erreichen eines Stromkurzschlusswertes durch den Startermotorstrom zu koppeln.

2. Starterversorgungsnetz gemäß Anspruch 1, wobei der Koppler (111, 301) ausgebildet ist, die zweite Energiequelle (109) mit dem Netzanschluss (105) bei Erreichen, Unterschreiten oder Überschreiten eines bestimmten Stromschwellwertes durch den Startermotorstrom zu koppeln.

3. Starterversorgungsnetz gemäß einem der vorstehenden Ansprüche, wobei der Koppler (111, 301) ausgebildet ist, die zweite Energiequelle (109) zum Erhöhen des Startermotorstroms mit dem Netzanschluss (105) zu koppeln.

4. Starterversorgungsnetz gemäß einem der vorstehenden Ansprüche, wobei der Koppler (111, 301) einen steuerbaren Schalter (111), insbesondere einen Transistorschalter, aufweist.

5. Starterversorgungsnetz gemäß einem der vorstehenden Ansprüche, wobei der Koppler (111, 301) zwei hintereinander geschaltete Schalter (111, 301), insbesondere Transistorschalter, aufweist, welche vorgesehen sind, die zweite Energiequelle (109) mit dem Netzanschluss (105) zu koppeln, und wobei der Startermotorstrom über einen Ausgangsanschluss (113) zwischen den zwei hintereinander geschalteten Schaltern ausgebbar ist.

6. Starterversorgungsnetz gemäß einem der vorstehenden Ansprüche, wobei der Koppler (111, 301) ausgebildet ist, die zweite Energiequelle (109) über eine Diode (201), insbesondere über eine in Flussrichtung oder in Sperrrichtung geschaltete Diode, mit dem Netzanschluss (105) zu koppeln.

7. Starterversorgungsnetz gemäß einem der vorstehenden Ansprüche, wobei die erste Energiequelle (101) eine Startermotorbatterie und wobei die zweite Energiequelle (109) ein Kondensator ist.

8. Startermotorsystem, mit
einem Startermotor; und
dem Starterversorgungsnetz gemäß einem der Ansprüche 1 bis 7 zum Versorgen des Startermotors mit elektrischer Energie.

## Claims

1. Starter supply network comprising:
a first energy source (101) for the primary supply of energy to a starter motor, wherein the first energy source (101) is coupled to a network connection (105) of the starter supply network;
a second energy source (109); and
a coupler (111, 301) which is designed to couple the second energy source (109) to the network connection (105) depending on a starter motor current which is output by the first energy source (101), in order to counteract a reduction in the starter motor current,
**characterized in that** the coupler (111, 301) is designed to couple the second energy source (109) to the network connection (105) after a specific time interval has elapsed after a current short-circuit value is reached by the starter motor current.

2. Starter supply network according to Claim 1, wherein the coupler (111, 301) is designed to couple the second energy source (109) to the network connection (105) when a specific current threshold value is reached, undershot or exceeded by the starter motor current.

3. Starter supply network according to either of the preceding claims, wherein the coupler (111, 301) is designed to couple the second energy source (109) to the network connection (105) in order to increase the starter motor current.

4. Starter supply network according to one of the preceding claims, wherein the coupler (111, 301) has a controllable switch (111), in particular a transistor switch.

5. Starter supply network according to one of the preceding claims, wherein the coupler (111, 301) has two switches (111, 301), in particular transistor switches, which are connected in series and which are intended to couple the second energy source (109) to the network connection (105), and wherein the starter motor current can be output by means of an output connection (113) between the two switches which are connected in series.

6. Starter supply network according to one of the preceding claims, wherein the coupler (111, 301) is designed to couple the second energy source (109) to the network connection (105) via a diode (201), in particular via a forward-biased or reverse-biased diode.

7. Starter supply network according to one of the preceding claims, wherein the first energy source (101) is a starter motor battery, and wherein the second energy source (109) is a capacitor.

8. Starter motor system, comprising
a starter motor; and
the starter supply network according to one of Claims 1 to 7 for supplying electrical energy to the starter motor.

## Revendications

1. Réseau d'alimentation de démarreur comprenant :
une première source d'énergie (101) qui alimente en énergie primaire un moteur de démarreur, la première source d'énergie (101) étant raccordée à une borne réseau (105) du réseau d'alimentation de démarreur,
une deuxième source d'énergie (109) et
un coupleur (111, 301) configuré pour raccorder la deuxième source d'énergie (109) à la borne réseau (105) en fonction du courant de moteur de démarreur délivré par la première source d'énergie (101) pour s'opposer à une diminution du courant de moteur de démarreur, **caractérisé en ce que**
le coupleur (111, 301) est configuré pour raccorder la deuxième source d'énergie (109) à la borne réseau (105) après qu'un intervalle de temps défini s'est écoulé depuis que le courant du moteur de démarreur a atteint la valeur du courant de court-circuit.

2. Réseau d'alimentation de démarreur selon la revendication 1, dans lequel le coupleur (111, 301) est configuré pour raccorder la deuxième source d'énergie (109) à la borne réseau (105) lorsque le courant du moteur de démarreur atteint, n'atteint pas ou dépasse une valeur définie de seuil de courant.

3. Réseau d'alimentation de démarreur selon l'une des revendications précédentes, dans lequel le coupleur (111, 301) est configuré pour raccorder la deuxième source d'énergie (109) à la borne réseau (105) en vue d'augmenter le courant du moteur de démarreur.

4. réseau d'alimentation de démarreur selon l'une des revendications précédentes, dans lequel le coupleur (111, 301) présente un commutateur asservi (111) et en particulier un commutateur à transistor.

5. Réseau d'alimentation de démarreur selon l'une des revendications précédentes, dans lequel le coupleur (111, 301) présente deux commutateurs (111, 301) raccordés l'un à la suite de l'autre, en particulier des commutateurs à transistor, prévus pour raccorder la deuxième source d'énergie (109) à la borne réseau (105), le courant du moteur de démarreur pouvant être délivré par l'intermédiaire d'une borne de sortie (113) située entre les deux commutateurs raccordés l'un à la suite de l'autre.

6. Réseau d'alimentation de démarreur selon l'une des revendications précédentes, dans lequel le coupleur (111, 301) est configuré pour raccorder la deuxième source d'énergie (109) à la borne réseau (105) par l'intermédiaire d'une diode (201), en particulier par l'intermédiaire d'une diode raccordée dans le sens du passage ou dans le sens du blocage du courant.

7. Réseau d'alimentation de démarreur selon l'une des revendications précédentes, dans lequel la première source d'énergie (101) est une batterie de moteur de démarreur et la deuxième source d'énergie (109) un condensateur.

8. Système de moteur de démarreur présentant un moteur de démarreur et un réseau d'alimentation de démarreur selon l'une des revendications 1 à 7, pour alimenter le moteur du démarreur en énergie électrique.
